# EUROPEAN PATENT APPLICATION

(11) **EP 4 804 391 A1**
(43) Date of publication of application: **09.09.2026**
(21) Application number: 26162984.4
(22) Date of filing: 06.03.2026
(51) Int. Cl.: H02K 33/16, H02K 11/215, G01S 7/481, G02B 26/10

(54) **MOTOR MODULE AND LIDAR**

(30) Priority: 06.03.2025 CN 202510271866
(71) Applicant: Suteng Innovation Technology Co., Ltd, Shenzhen City Guangdong 518000 (CN)
(72) Inventor: HE, Zhen, Shenzhen City (CN); LEI, Youxue, Shenzhen City (CN); ZHU, Congcong, Shenzhen City (CN); XU, Fenglian, Shenzhen City (CN); ZHU, Bihua, Shenzhen City (CN)
(74) Representative: Ran, Handong

(57) **Abstract**

A motor module and a LiDAR are provided. The motor module includes a stator assembly, a rotor assembly, and a support body. The stator assembly includes a housing and a stator winding mounted inside the housing. The rotor assembly includes a rotating shaft and a magnetic core, wherein the magnetic core is fixedly sleeved on the rotating shaft, and the magnetic core is surrounded by the stator winding. One end of the rotating shaft is disposed inside the housing, and the other end of the rotating shaft is fixedly connected to the support body. The housing includes a first limiting portion and a second limiting portion, wherein the support body rotates between the first limiting portion and the second limiting portion driven by the rotating shaft.

## Description

### TECHNICAL FIELD

The present application relates to the field of LiDAR technology, and more specifically, to a motor module and a LiDAR.

### BACKGROUND

LiDAR is a precision instrument that uses laser pulses for ranging and sensing, and has been widely applied in fields such as autonomous driving, industrial surveying and mapping, robotics, and intelligent transportation. Among them, a motor module (including a motor and a support body) usually serves as a power element in a scanning component of the LiDAR, for driving a support body (such as a vibrating mirror, a swinging mirror, or a rotating mirror) to perform reciprocating motion, so as to achieve scanning of the LiDAR for different detection fields of view.

In existing technical solutions, continuous circular motion is usually achieved by driving a multi-faceted rotating mirror with a motor. This technical solution is suitable for achieving uniform scanning in the horizontal direction. However, the actual utilization rate of multiple reflecting surfaces of the multi-faceted rotating mirror is low, and the arrangement of multiple reflecting surfaces also makes the rotational inertia and volume of the motor module (including the motor and the multi-faceted rotating mirror) large, which is unfavorable for achieving variable-speed scanning and miniaturized design of the motor module.

### SUMMARY

Embodiments of the present application provide a motor module and a LiDAR, which can reduce the axial dimension of the motor module, lower the rotational inertia of the motor module, and improve the comprehensive performance of the motor module.

In a first aspect, an embodiment of the present application discloses a motor module, wherein the motor module comprises a stator assembly, a rotor assembly, and a support body; wherein the stator assembly comprises a housing and a stator winding mounted inside the housing, and the rotor assembly comprises a rotating shaft and a magnetic core; wherein the magnetic core is fixedly sleeved on the rotating shaft, and the magnetic core is surrounded by the stator winding; wherein a first end of the rotating shaft is disposed inside the housing, and a second end of the rotating shaft is fixedly connected to the support body; wherein the housing comprises a first limiting portion and a second limiting portion, and the support body rotates between the first limiting portion and the second limiting portion driven by the rotating shaft.

In some embodiments, wherein the housing comprises a first shell and a second shell, and the second shell comprises the first limiting portion and the second limiting portion; wherein the stator winding is fixed inside the first shell, and the second shell is partially embedded in the first shell.

In some embodiments, the support body comprises a first frame and a second frame, and the second shell is located between the first frame and the first shell, wherein the second frame is bent relative to the first frame, and the first frame rotates between the first limiting portion and the second limiting portion driven by the rotating shaft.

Simplifying the limiting structure design of the support body is conducive to simplifying the structure of the motor module. Moreover, the arrangement of the two limiting portions can enhance the risk resistance of the motor module under high load by restricting the angular rotation range of the support body. The second frame being bent relative to the first frame is beneficial for reducing the axial dimension of the motor module.

In some embodiments, wherein a through hole is formed in the first frame, and the second end of the rotating shaft comprises a dispensing groove; wherein the second end of the rotating shaft passes through the through hole, and adhesive is filled between a wall of the through hole and the dispensing groove.

In some embodiments, wherein the second frame extends downward along an axial direction of the rotating shaft, and the first limiting portion and the second limiting portion extend upward along the axial direction of the rotating shaft on the second shell.

In some embodiments, the support body further comprises a lens, the lens comprises an adhesive surface and a reflective surface, and the second frame comprises a mounting surface; wherein the mounting surface is parallel to the axial direction of the rotating shaft, and the adhesive surface is fixedly connected to the mounting surface.

Such an off-axis design can reduce the axial dimension of the motor module and make full use of the redundant space at the installation position of the motor module.

In some embodiments, wherein a projection of the lens in a plane perpendicular to the axial direction of the rotating shaft is a first projection, a projection of the housing in the plane perpendicular to the axial direction of the rotating shaft is a second projection, and the first projection and the second projection do not overlap.

The lens being arranged off-axis relative to the axis of the rotating shaft is beneficial for reducing the overall axial dimension of the motor module.

In some embodiments, wherein the motor module further comprises a main control board, a magnetic sensor, and a sector-shaped magnet; wherein the main control board is fixed on the second shell, the magnetic sensor is disposed on the main control board, and the sector-shaped magnet is disposed on the first frame.

In some embodiments, wherein a sector-shaped groove is formed on a first end of the first frame close to the main control board, wherein the sector-shaped magnet is disposed in the sector-shaped groove, and the second frame is connected to a second end of the first frame away from the main control board.

The main control board and the second frame are respectively disposed at two ends of the first frame, that is, the main control board and the second frame are respectively disposed on opposite sides. While reducing the axial dimension of the motor module, the redundant space at the installation position of the motor module can be fully utilized, which is conducive to reducing the volume of the motor module.

In a second aspect, an embodiment of the present application discloses a LiDAR, which comprises a transmitting module, a receiving module, and the motor module according to the above embodiments.

The embodiments of the present application disclose a motor module, in which a second end of a rotating shaft is fixedly connected to a support body and drives the support body to move between a first limiting portion and a second limiting portion. The motor module can combine a single lens as a scanning component of the LiDAR. Compared with the common multi-faceted rotating mirror form, the number of lens pieces used can be reduced, the utilization rate of the lens can be improved, and the rotational inertia of the motor module and the overall cost can be lowered. Moreover, in the embodiment of the present application, the first limiting portion and the second limiting portion are directly arranged on the housing of the motor module, which simplifies the limiting structure design while realizing the restriction on the activity range of the support body. The form in which the support body rotates between the first limiting portion and the second limiting portion also reduces the influence of the self-inertia of the motor module and improves the operating performance of the motor module. In addition, this technical solution in which the lens is arranged on one side of the housing of the motor module (the lens is arranged off-axis relative to the rotating shaft) can effectively reduce the axial dimension of the motor module, which is conducive to reducing the volume of the motor module, and further conducive to the miniaturized design of the LiDAR.

### BRIEF DESCRIPTION OF DRAWINGS

FIG. 1 is a schematic structural diagram of a motor module according to an embodiment of the present application;
FIG. 2 is an exploded view of a motor module according to an embodiment of the present application;
FIG. 3 is a schematic cross-sectional view of a motor module according to an embodiment of the present application;
FIG. 4 is a schematic structural diagram of a motor module according to an embodiment of the present application;
FIG. 5 is a schematic structural diagram of a second shell according to an embodiment of the present application;
FIG. 6 is a schematic structural diagram of a rotating shaft according to an embodiment of the present application; and
FIG. 7 is a schematic structural diagram of a lens holder according to an embodiment of the present application.

Reference: 100, motor module; 11, housing; 111, first shell; 112, second shell; 1121, mounting portion; 1122, connecting portion; 12, stator winding; 13, first bearing; 14, second bearing; 15, first limiting portion; 16, second limiting portion; 17, cavity; 18, first limiting step; 19, second limiting step; 21, rotating shaft; 211, mounting hole; 212, centering hole; 213, dispensing groove; 22, magnetic core; 23, limiting pin; 31, lens holder; 311, first frame; 3111, through hole; 3112, sector-shaped groove; 312, second frame; 3121, mounting surface; 40, main control board; 51, sector-shaped magnet; 60, lens; 61, reflective surface; 62, adhesive surface.

### DETAILED DESCRIPTION

In the structure of a LiDAR, a motor module serves as a scanning component of the LiDAR, for changing the propagation direction of a scanning light beam or an echo light beam, so as to achieve scanning of the LiDAR for different field-of-view regions. In the technical solution where a motor module drives a multi-faceted rotating mirror to perform continuous circular motion, the multi-faceted rotating mirror includes multiple reflecting surfaces. During the continuous circular motion, a part of the reflecting surfaces deflects the propagation direction of the scanning light beam or the echo light beam to achieve point cloud scanning of a large field of view. This technical solution of driving a multi-faceted rotating mirror to perform continuous circular motion is suitable for uniform rotation. However, it also has problems such as large rotational inertia and difficulty in achieving variable-speed scanning, and the actual utilization rate of the multiple reflecting surfaces is low, and the overall cost of the motor module is high. In the technical solution where a motor module drives a single vibrating mirror or swinging mirror to perform swinging motion, taking the swinging mirror solution as an example, the swinging mirror, the housing of the motor module, and other components are usually arranged sequentially along the axial direction of the rotating shaft, resulting in a large overall dimension of the motor module along the axial direction.

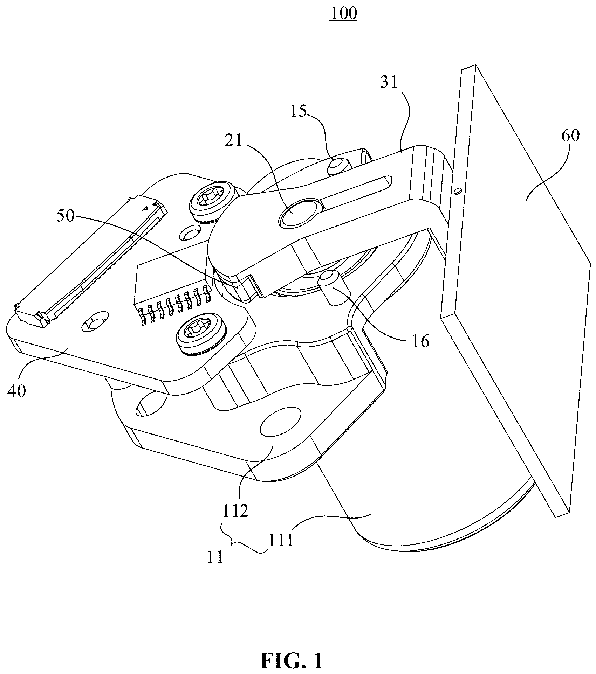

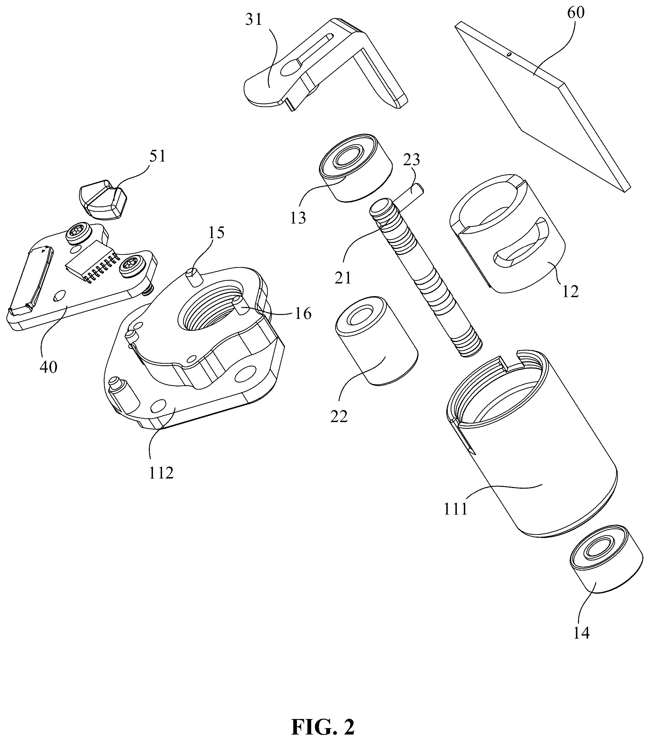

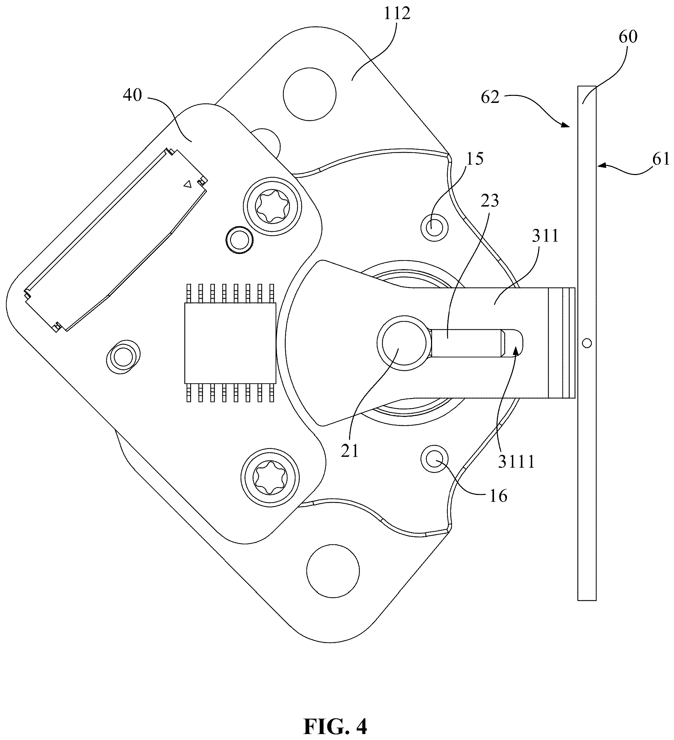

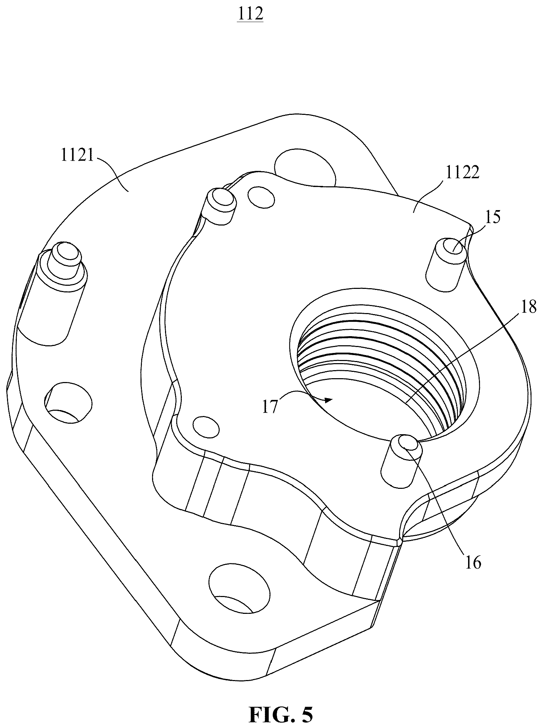

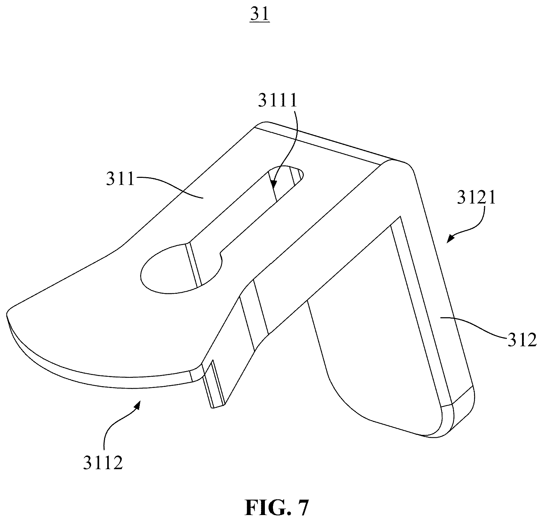

To reduce the rotational inertia and overall volume of the motor module, and improve the comprehensive performance of the motor module, an embodiment of the present application discloses a novel motor module. In one embodiment, referring to FIGS. 1 to 7, the motor module 100 includes a stator assembly, a rotor assembly, a main control board 40, a support body, and an angular position sensing component, and its overall structure is shown in FIG. 1. The stator assembly includes a housing 11 and a stator winding 12 fixedly mounted inside the housing 11. The rotor assembly includes a rotating shaft 21 and a magnetic core 22. The rotating shaft 21 includes a first end and a second end disposed oppositely. The first end of the rotating shaft 21 is disposed inside the housing 11, and the second end of the rotating shaft 21 is fixedly connected to the support body. The magnetic core 22 is located inside the housing 11, surrounded by the stator winding 12. Moreover, the magnetic core 22 is fixedly sleeved on the rotating shaft 21 and adhesively fixed to the rotating shaft 21. The magnetic core 22 is configured to sense the alternating magnetic field generated by the stator winding 12 and drive the rotating shaft 21 to rotate.

The stator winding 12 includes a conductive coil. After being potted with a potting compound, the conductive coil is adhesively fixed to the inner wall of the housing 11. Herein, the potting compound is used to provide mechanical support and sealing protection for the conductive coil, and its insulating property can also effectively isolate the electrical connection between the conductive coil and the external environment of the coil. In the cured state of the potting compound, the conductive coil can be firmly fixed to prevent it from moving or loosening due to vibration or changes in working conditions. Meanwhile, the sealing performance of the potting compound can effectively prevent moisture, dust, or other impurities from entering the interior of the system, thereby extending the service life of the device and improving its reliability. The types of potting compounds include one or more combinations of silicone, epoxy resin, polyurethane, etc. One end of the conductive coil extends out from the cured potting compound and is electrically connected to the main control board 40. The main control board 40 is configured to control the current in the conductive coil to control the frequency and amplitude of the alternating magnetic field, thereby controlling the rotational speed and angle of the rotating shaft 21.

In one embodiment, the second end of the rotating shaft 21 protrudes from the housing 11 and is fixedly connected to the support body. The housing 11 includes a first limiting portion 15 and a second limiting portion 16. Wherein, the support body rotates between the first limiting portion 15 and the second limiting portion 16 driven by the rotating shaft 21. The support body may be a vibrating mirror, a rotating mirror, a plane mirror, or other non-optical components (such as hubs, metal processing parts, etc.). When the rotating shaft 21 rotates, it drives the support body to rotate around the axis of the rotating shaft 21. The first limiting portion 15 and the second limiting portion 16 are disposed on the top of the housing 11 and constructed as protrusions protruding from the top surface of the housing 11. The first limiting portion 15 and the second limiting portion 16 are spaced apart circumferentially along the rotating shaft 21. At least a part of the support body is located between the first limiting portion 15 and the second limiting portion 16 and moves within the area defined by the first limiting portion 15 and the second limiting portion 16, thereby defining the maximum angle of rotation of the support body driven by the rotating shaft 21. When an alternating current is input into the stator winding 12 to generate an alternating magnetic field, the magnetic core 22 drives the rotating shaft 21 to perform a reciprocating swing, thereby driving the support body to perform a reciprocating swing between the first limiting portion 15 and the second limiting portion 16.

In some embodiments, each limiting portion is a boss structure formed by extending along the axial direction of the rotating shaft 21 on the housing 11, and the boss structure is a cylinder, a frustum of a cone, a cone, etc. The first limiting portion 15 and the second limiting portion 16 may be constructed as an integrated connection structure or a split connection structure with the housing 11. Such a boss-type limiting structure is simple in construction and can simplify the structural design of the motor module. The length of each limiting portion protruding from the housing 11 along the axial direction is less than or equal to the length of the second end of the rotating shaft 21 protruding from the housing 11, thereby effectively compressing the dimension of the motor module 100 along the axial direction.

Under normal circumstances, the support body does not collide with the first limiting portion 15 or the second limiting portion 16, ensuring the smooth operation of the motor module 100. Only when faults such as overload, overheating, or abnormal rotational speed occur in the motor module 100, unstable motion of the rotating shaft 21 or the support body may be triggered. In such an emergency, the first limiting portion 15 and the second limiting portion 16 are used to limit the swing amplitude of the support body, thereby limiting the swing amplitude of the rotating shaft 21, preventing the motor module 100 from being damaged due to excessive operation, improving the safety of use of the motor module 100, and ensuring that the motor module 100 can protect itself in abnormal situations to prevent the expansion of faults.

In one embodiment, the housing 11 includes a first shell 111 and a second shell 112. The first shell 111 is constructed as a hollow columnar structure with an opening. At least a part of the second shell 112 is embedded in the opening of the first shell 111. Wherein, the stator winding 12 is installed inside the first shell 111 and arranged surrounding the magnetic core 22. A part of the second shell 112 is embedded into the opening of the first shell 111 along the axial direction of the rotating shaft 21 and is in clearance fit with the inner wall of the opening side of the first shell 111. The gap between the second shell 112 and the first shell 111 is filled with adhesive to bond and fix the two. The second shell 112 (the side of the second shell 112 away from the first shell 111) extends upward to form the first limiting portion 15 and the second limiting portion 16.

In an embodiment, a limiting protrusion is provided on the side of the second shell 112 facing the first shell 111, and a limiting groove forming a notch is provided on the shell wall of the first shell 111. After the second shell 112 and the first shell 111 are assembled, the limiting protrusion is accommodated in the limiting groove. Through the limiting cooperation between the limiting protrusion and the limiting groove, rapid positioning and assembly of the second shell 112 and the first shell 111 can be achieved. It can also cooperate to restrict the amount of movement or rotation of the second shell 112 relative to the first shell 111, thereby improving the connection stability of the second shell 112 and the first shell 111 and ensuring the normal operation of the motor module 100. In another embodiment, the second shell 112 is provided with a limiting groove, while the first shell 111 is provided with a limiting protrusion, and both the limiting groove and the limiting protrusion may be provided in multiple numbers, with the limiting groove and the limiting protrusion corresponding one-to-one, to improve the assembly efficiency and accuracy of the motor module 100.

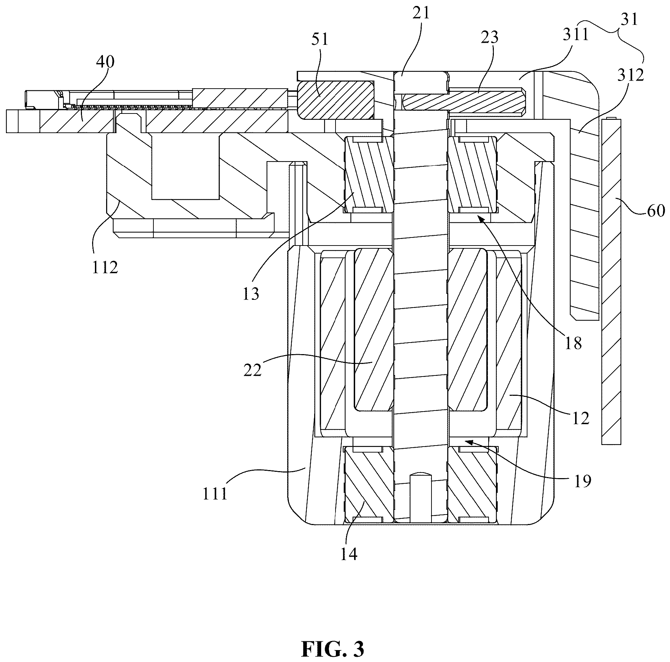

In one embodiment, the motor module 100 further includes a first bearing 13 and a second bearing 14. The rotating shaft 21 sequentially passes through the second bearing 14, the magnetic core 22, and the first bearing 13, and is then fixedly connected to the support body. As shown in FIGS. 3 to 5, the second shell 112 includes a mounting portion 1121 and a connecting portion 1122. A part of the connecting portion 1122 is embedded in the first shell 111. The mounting portion 1121 and the connecting portion 1122 are an integrally formed structure or a split structure fixedly connected. A part of the connecting portion 1122 extends upward from the first end face of the mounting portion 1121 along the axial direction, and another part of the connecting portion 1122 extends downward from the second end face of the mounting portion 1121 along the axial direction and is embedded in the opening of the first shell 111. The mounting portion 1121 includes a first positioning post and a first screw hole. The connecting portion 1122 includes a second positioning post and a second screw hole. The main control board 40 includes a first positioning hole, a second positioning hole, and a third screw hole. The first positioning post passes through one first positioning hole, and the second positioning post passes through one second positioning hole, for realizing preliminary positioning of the main control board 40. A first limiting screw sequentially passes through one second screw hole and one third screw hole to realize the fixed installation of the main control board 40. The second positioning post, the second screw hole, the first limiting portion 15, and the second limiting portion 16 are disposed on the end face of the connecting portion 1122 facing the first frame 311 and are distributed at intervals circumferentially along the end face of the connecting portion 1122 facing the first frame 311. When the motor module is disposed in the LiDAR, the first screw hole on the mounting portion 1121 is used as part of a fixing assembly, so that the motor module is fixedly installed in the housing structure of the LiDAR based on screw fastening.

A cavity 17 is opened in the connecting portion 1122. The second end of the rotating shaft 21 passes through the cavity 17 and then protrudes from the housing 11. A first limiting step 18 is disposed in the cavity 17, located between the first bearing 13 and the magnetic core 22. The first limiting step 18 is configured to limit the installation position of the first bearing 13 in the axial direction of the rotating shaft 21, thereby realizing rapid positioning of the first bearing 13 in the axial direction. The first shell 111 further includes a second limiting step 19 inside. The magnetic core 22 is located between the first limiting step 18 and the second limiting step 19. The second limiting step 19 is configured to limit the installation position of the second bearing 14 in the axial direction of the rotating shaft 21, thereby realizing rapid positioning of the second bearing 14 in the axial direction.

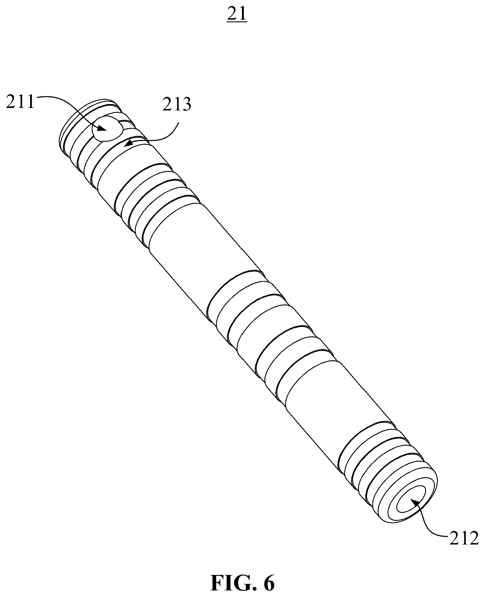

In one embodiment, as shown in FIG. 6, the rotating shaft 21 further includes a centering hole 212. The centering hole 212 facilitates guiding the rotor assembly and bearing components to be installed into the first shell 111 during production and assembly. Taking the assembly process of the second bearing 14 and the rotating shaft 21 as an example, the rotating shaft 21 is fixed on a jig through the centering hole 212. A constant force F along the axial direction of the rotating shaft 21 is applied through the jig. After the adhesive between the rotating shaft 21 and the second bearing 14 is cured, the constant force F is removed, which can effectively eliminate the clearance between the inner wall of the bearing and the rotating shaft 21.

In one embodiment, each bearing includes an outer wall, an inner wall, and balls or rollers located between the outer wall and the inner wall. Wherein, the inner wall of the first bearing 13 is adhesively fixed to the rotating shaft 21, and the outer wall of the first bearing 13 is adhesively fixed to the inner wall of the housing of the mounting portion 1121. The inner wall of the second bearing 14 is adhesively fixed to the rotating shaft 21, and the outer wall of the second bearing 14 is adhesively fixed to the inner wall of the housing of the first shell 111. In the embodiment of the present application, two bearings are provided to restrict the radial movement and axial movement of the rotating shaft 21, ensuring the working stability of the motor module 100. Exemplarily, when the motor module is applied to the field of LiDAR, it can effectively ensure the scanning accuracy of the motor module 100 when applied to point cloud scanning.

In one embodiment, the angular position sensing component includes a magnetic sensor and a sector-shaped magnet 51. Wherein, the magnetic sensor is disposed on the main control board 40, and the sector-shaped magnet 51 is disposed on the support body. The magnetic sensor and the sector-shaped magnet 51 cooperate together to sense and record the change in the rotation angle of the rotating shaft 21, providing accurate rotation angle feedback and enhancing the angle positioning accuracy of the motor module 100.

In one embodiment, the support body includes a lens holder 31. The lens holder 31 includes a first frame 311 and a second frame 312. The first frame 311 and the second frame 312 may be an integrally formed structure or a split structure fixedly connected. Wherein, the second shell 112 is located between the first frame 311 and the first shell 111. The second frame 312 is bent relative to the first frame 311. The second frame 312 is located on one side of the housing 11, and there is a radial gap between the second frame 312 and the first shell 111 along the radial direction of the rotating shaft 21.

Exemplarily, the first frame 311 is formed by extending along the radial direction of the rotating shaft 21, and the second frame 312 is formed by extending downward along the axial direction of the rotating shaft 21. The first limiting portion 15 and the second limiting portion 16 are both formed by extending upward along the axial direction on the second shell 112. There is a gap between the sidewall of the second frame 312 and the sidewall of the second shell 112. A through hole 3111 is opened in the first frame 311. The through hole 3111 penetrates the first frame 311 along the axial direction of the rotating shaft 21 and is located above the cavity 17 of the second shell 112. The second end of the rotating shaft 21 sequentially passes through the cavity 17 and the through hole 3111, and is fixedly connected to the wall of the through hole 3111.

In one embodiment, the second end of the rotating shaft 21 includes a dispensing groove 213. Adhesive is filled between the dispensing groove 213 and the wall of the through hole 3111. The dispensing groove 213 is used to accommodate adhesive and prevent the adhesive from overflowing. In some embodiments, the dispensing groove 213 is also disposed between the inner walls of the bearings and the rotating shaft 21, or the dispensing groove 213 is also located between the rotating shaft 21 and the magnetic core 22.

In one embodiment, the rotor assembly further includes a limiting pin 23 extending radially relative to the rotating shaft 21. A mounting hole 211 is opened in the rotating shaft 21, and the mounting hole 211 is formed by opening radially along the rotating shaft 21. A first end of the limiting pin 23 passes through the mounting hole 211, and a second end of the limiting pin 23 is located in the through hole 3111. The through hole 3111 includes a hole-shaped portion and a strip-shaped groove portion. The strip-shaped groove portion is communicated with the hole-shaped portion. The hole-shaped portion is used to accommodate and fix the second end of the rotating shaft 21, and the limiting pin 23 is accommodated and fixed in the strip-shaped groove portion. Observing the limiting pin 23 through the through hole 3111, on one hand, facilitates the dispensing operation inside the through hole 3111, including the adhesive bonding between the rotating shaft 21 and the hole-shaped portion or between the limiting pin 23 and the mounting hole 211, and facilitates observation and maintenance of the limiting pin 23. The through-hole opening of the through hole 3111 also reduces the weight of the first frame 311, which is conducive to the weight reduction operation of the overall lens holder 31, helps reduce the rotational inertia of the motor module 100, and improves the performance of the motor module 100. On the other hand, the limiting pin 23 can serve as a zero-position indication location in zero-position calibration, facilitating the calibration and identification of the position of the lens holder during assembly.

In one embodiment, the support body includes a lens holder 31 and a lens 60. The lens 60 may be a single-plane mirror. The second frame 312 is located between the lens 60 and the first shell 111. The second frame 312 includes a mounting surface 3121. Wherein, the mounting surface 3121 is parallel to the axial direction of the rotating shaft 21. The radial distance between the center of the mounting surface 3121 and the axis of the rotating shaft 21 is a first distance. The radial dimension of the second frame 312 along the axis of the rotating shaft 21 is a first size. The maximum radial dimension of the housing 11 along the axis of the rotating shaft 21 is a second size. The first distance is greater than the second size, and the first distance is greater than the sum of the first size and the second size. In an embodiment, the lens 60 includes an adhesive surface 62 and a reflective surface 61 that are parallel to each other. The reflective surface 61 is parallel to the axial direction of the rotating shaft 21. The reflective surface 61 is used as an optical working surface to change the propagation direction of a laser beam, and the adhesive surface 62 is fixedly connected to the mounting surface 3121 of the second frame 312. A projection of the lens 60 in a plane perpendicular to the axial direction of the rotating shaft 21 is a first projection, and a projection of the housing 11 in the plane perpendicular to the axial direction of the rotating shaft 21 is a second projection, wherein the first projection and the second projection do not overlap. In the above embodiment, the lens 60 is off-axis with respect to the rotating shaft 21 based on the bent second frame 312. Compared with the multi-faceted rotating mirror solution, on one hand, the number of lenses used is reduced, thereby reducing the rotational inertia of the motor module 100 and improving the NVH (Noise, Vibration, Harshness) performance of the motor module 100.

In practical applications, considering the reciprocating motion of the lens 60, internal components or structures of the LiDAR usually need to avoid the positions of the lens 60 at different times. Therefore, the spatial areas on both sides of the motor module 100 in the radial direction are left blank to form redundant space. In the embodiment of the present application, the second frame 312 (and the lens 60) is disposed on one side of the second shell 112, the main control board 40 is disposed on the other side of the second shell 112 and the support body, and the first frame 311 moves between the first limiting portion 15 and the second limiting portion 16. That is, the main control board 40, the first frame 311, the second frame 312, and the lens 60 are arranged sequentially in the radial direction of the rotating shaft 21. This radial arrangement cooperates with the off-axis setting of the lens 60 to make full use of the redundant space at the installation position of the motor module 100, effectively reducing the axial dimension of the vibrating mirror motor module 100, and being conducive to the miniaturized design of the LiDAR. Herein, the axial direction of the motor module 100 refers to the axial direction of the rotating shaft 21.

In one embodiment, a first end of the first frame 311 close to the main control board 40 extends to form a sector-shaped structure. An avoidance area is provided on the side of the main control board 40 close to the first frame 311 to avoid the sector-shaped structure of the first frame 311. Wherein, a sector-shaped groove 3112 is opened in the sector-shaped structure of the first frame 311. The sector-shaped magnet 51 is fixedly installed in the sector-shaped groove 3112 by means of adhesive bonding or the like to improve the installation stability of the sector-shaped magnet 51 and ensure positioning accuracy. That is, the main control board 40 is fixed on the second shell 112, the sector-shaped magnet 51 is disposed on a first end of the first frame 311 close to the main control board 40, and the second frame 312 is connected to a second end of the first frame 311 away from the main control board 40. A projection of the sector-shaped magnet 51 in a plane perpendicular to the axial direction of the rotating shaft 21 is a third projection, and a projection of the magnetic sensor in the plane perpendicular to the axial direction of the rotating shaft 21 is a fourth projection, wherein the third projection and the fourth projection do not overlap or partially overlap. The sector-shaped magnet includes a first polarity magnet and a second polarity magnet, which have completely consistent dimensions and shapes, and the outer contours of the two together enclose a sector. Wherein, the boundary line between the first polarity magnet and the second polarity magnet is on the same straight line as the central axis of the limiting pin 23, and the limiting pin 23 is used to assist the sector-shaped magnet in zero-position calibration of the rotation angle of the rotating shaft.

In some embodiments, the first shell 111 is used for magnetic conduction, and its material is a metal material with a high magnetic conductivity, for limiting the magnetic field range of the stator winding 12. The first end of the rotating shaft 21 is fixed to the first shell 111, and the second end of the rotating shaft 21 passes through the second shell 112 and is then fixedly connected to the support body. The material of the second shell 112 may be the same as or different from that of the first shell 111. It may be made of a metal material to meet the strength requirements of the motor module 100, or may be made of plastic or the like to achieve lightweight and cost reduction. The connection between the second shell 112 and the first shell 111 adopts one or more combinations of connection methods such as adhesive fixation, screw fastening, and snap-fit connection.

In the embodiment of the present application, the motor module 100 includes a stator assembly, a rotor assembly, a main control board 40, a support body (including a lens holder 31 and a lens 60), and an angular position sensing component. Compared with the multi-faceted rotating mirror solution, fewer lenses are used, effectively improving the utilization rate of the lens 60; reducing the mass and rotational inertia of the motor module 100, making it easier to achieve variable-speed scanning and improving the scanning performance when applied to a LiDAR. In addition, the first frame 311 extends in the radial direction of the motor module 100, the main control board 40 is located on one side of the first frame 311, the second frame 312 is located on the other side of the first frame 311, and the second frame 312 is bent relative to the first frame 311 so that the mounting surface 3121 is located on the side of the housing 11, realizing the off-axis setting of the lens 60 with respect to the rotating shaft 21, making full use of the redundant space at the installation position of the motor module 100. On the basis of reducing costs, the axial dimension of the motor module 100 is reduced, which is conducive to reducing the volume of the motor module 100 and realizing the miniaturized design of the LiDAR.

In one embodiment, the present application discloses a LiDAR, which includes a transmitting module, a receiving module, a central processor, and the motor module 100 in the above embodiment. The central processor is configured to interact with a processor located on the main control board 40 to control the scanning frequency and scanning angle of the motor module 100. The central processor is also configured to control the transmitting module to emit a laser beam. The laser beam emitted by the laser is reflected by the lens 60 to a target object. The echo beam formed by the reflection of the laser beam by the target object is received by the receiving module via the lens 60 or directly, completing the scanning of the target object.

In some embodiments, the LiDAR is one of a mechanical LiDAR, an Optical Phased Array (OPA) solid-state LiDAR, a Micro Electromechanical System (MEMS) solid-state LiDAR, or a Flash solid-state LiDAR. The transmitting module includes an area array transmitting array or at least one linear array transmitting array. Each transmitting array includes a laser diode, a Vertical-Cavity Surface-Emitting Laser (VCSEL), or an Edge-Emitting Laser (EEL). The receiving module includes a plurality of receiving units. The receiving unit is a Single Photon Avalanche Diode (SPAD) or a silicon photomultiplier. A plurality of receiving units form an area array receiving chip or a linear array receiving chip. The central processor is a Field-Programmable Gate Array (FPGA), a System on Chip (SoC), a Central Processor Unit (CPU), a Network Processor (NP), a digital signal processing circuit, a Micro Controller Unit (MCU), an Application-Specific Integrated Circuit (ASIC), or any combination thereof, for implementing related functions.

## Claims

1. A motor module, comprising a stator assembly, a rotor assembly, and a support body;
wherein the stator assembly comprises a housing and a stator winding mounted inside the housing, and the rotor assembly comprises a rotating shaft and a magnetic core; wherein the magnetic core is fixedly sleeved on the rotating shaft, and the magnetic core is surrounded by the stator winding;
wherein a first end of the rotating shaft is disposed inside the housing, and a second end of the rotating shaft is fixedly connected to the support body;
wherein the housing comprises a first limiting portion and a second limiting portion, and the support body rotates between the first limiting portion and the second limiting portion driven by the rotating shaft.

2. The motor module according to claim 1, wherein the housing comprises a first shell and a second shell, and the second shell comprises the first limiting portion and the second limiting portion,
wherein the stator winding is fixed inside the first shell, and the second shell is partially embedded in the first shell.

3. The motor module according to claim 1 or 2, wherein the support body comprises a first frame and a second frame, and the second shell is located between the first frame and the first shell,
wherein the second frame is bent relative to the first frame, and the first frame rotates between the first limiting portion and the second limiting portion driven by the rotating shaft.

4. The motor module according to claim 3, wherein a through hole is formed in the first frame, and the second end of the rotating shaft comprises a dispensing groove,
wherein the second end of the rotating shaft passes through the through hole, and adhesive is filled between a wall of the through hole and the dispensing groove.

5. The motor module according to claim 3, wherein the second frame extends downward along an axial direction of the rotating shaft, and the first limiting portion and the second limiting portion extend upward along the axial direction of the rotating shaft on the second shell.

6. The motor module according to claim 3, wherein the support body further comprises a lens, the lens comprises an adhesive surface and a reflective surface, and the second frame comprises a mounting surface,
wherein the mounting surface is parallel to the axial direction of the rotating shaft, and the adhesive surface is fixedly connected to the mounting surface.

7. The motor module according to claim 6, wherein a projection of the lens in a plane perpendicular to the axial direction of the rotating shaft is a first projection, a projection of the housing in the plane perpendicular to the axial direction of the rotating shaft is a second projection, and the first projection and the second projection do not overlap.

8. The motor module according to claim 3, wherein the motor module further comprises a main control board, a magnetic sensor, and a sector-shaped magnet,
wherein the main control board is fixed on the second shell, the magnetic sensor is disposed on the main control board, and the sector-shaped magnet is disposed on the first frame.

9. The motor module according to claim 8, wherein a sector-shaped groove is formed on a first end of the first frame close to the main control board, wherein the sector-shaped magnet is disposed in the sector-shaped groove, and the second frame is connected to a second end of the first frame away from the main control board.

10. A LiDAR, comprises a transmitting module, a receiving module, and the motor module according to any one of claims 1 to 9.
